(19) Europäisches Patentamt
European Patent Office
Office européen des brevets

(11) **EP 1 123 511 B1**

(12) **FASCICULE DE BREVET EUROPEEN**

(45) Date de publication et mention
de la délivrance du brevet:
**29.03.2006 Bulletin 2006/13**

(21) Numéro de dépôt: **99947571.8**

(22) Date de dépôt: **13.10.1999**

(51) Int Cl.:
*G01P 15/097* (2006.01)

(86) Numéro de dépôt international:
**PCT/FR1999/002489**

(87) Numéro de publication internationale:
**WO 2000/023808 (27.04.2000 Gazette 2000/17)**

(54) **ACCELEROMETRE MINIATURE MONOLITHIQUE**

MONOLITHISCHER MINIATUR-BESCHLEUNIGUNGSSENSOR

MONOLITHIC MINIATURE ACCELEROMETER

(84) Etats contractants désignés:
**DE FR GB IT**

(30) Priorité: **20.10.1998 FR 9813108**

(43) Date de publication de la demande:
**16.08.2001 Bulletin 2001/33**

(73) Titulaire: **ONERA (Office National d'Etudes et de Recherches Aérospatiales)**
**92320 Châtillon (FR)**

(72) Inventeurs:
• **JANIAUD, Denis**
**F-91940 Les Ulis (FR)**

• **LE TRAON, Olivier**
**F-91430 Vauhallan (FR)**
• **MULLER, Serge**
**F-91340 Ollainville (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(56) Documents cités:
**WO-A-93/20413        US-A- 4 939 935**
**US-A- 4 945 765**

**Description**

La présente invention concerne, de manière générale, un accéléromètre miniature pouvant être utilisé, par exemple, pour la navigation d'avions, d'hélicoptères et d'automobiles, pour l'assistance améliorée au freinage ou la suspension active de véhicules terrestres.

Plus particulièrement, l'invention a trait à un accéléromètre monolithique comprenant une partie fixe, deux parties massives mobiles appelées masses d'épreuve et deux résonateurs ayant chacun une extrémité solidaire de l'une des deux parties massives mobiles.

Les résonateurs, constituant les éléments sensibles de l'accéléromètre selon l'invention, sont de préférence des lames vibrantes en matériau piézo-électrique travaillant en flexion ou en torsion. Les fréquences de vibration de chacune des lames sont très sensibles à la force d'extension ou de compression qui s'exerce longitudinalement à la lame lorsque la masse d'épreuve qui lui est solidaire est soumise à une accélération. L'extension de l'une des lames et la compression de l'autre lame sont converties sous formes de signaux électriques qui sont captés par exemple par des électrodes supportées par les lames vibrantes et reliées à deux circuits oscillateurs. En sortie des circuits oscillateurs est produit un signal à fréquence différentielle dont les variations sont représentatives de celles de l'accélération. L'intérêt de travailler avec la différence des deux fréquences est de réduire l'influence des grandeurs d'entrée parasites qui agissent en mode commun sur les deux lames, par exemple la température.

Un autre aspect important est le caractère monolithique qui rend peu coûteuse la fabrication d'accéléromètres miniatures par usinage chimique et qui favorise les bonnes performances, puisque des assemblages de pièces constituent généralement une limitation majeure des accéléromètres non monolithiques. Les matériaux les plus fréquemment utilisés pour réaliser les accéléromètres monolithiques sont le quartz et le silicium, appréciés pour l'excellente stabilité de leurs caractéristiques mécaniques.

Un accéléromètre de ce type, objet du brevet US-4,945,765, est montré à la figure 1. Le corps de cet accéléromètre 14 est monolithique et est obtenu par usinage chimique d'une plaque de silicium. Ce corps comprend une partie fixe 18, deux masses d'épreuve 20 et 22, deux résonateurs 28 et 30 et deux articulations 24 et 26. Les résonateurs 28 et 30 vibrent en torsion et sont excités par effet électrostatique au moyen d'un dispositif (non représenté) en sortie duquel sont délivrées leurs fréquences de résonance. La direction de sensibilité de cet accéléromètre est proche de la perpendiculaire aux faces de la plaque. Une accélération appliquée suivant cette direction provoque une force d'extension sur un résonateur et une force de compression sur l'autre résonateur, et le signal de sortie de l'accéléromètre est la différence des fréquences des deux résonateurs. La conception mécanique de cet accéléromètre 14 présente cependant un inconvénient concernant les vibrations des deux résonateurs 28 et 30. Les efforts mécaniques alternatifs engendrés par les vibrations de ces deux résonateurs à leurs "encastrements" sur la partie fixe 18 provoquent une dissipation d'énergie mécanique vibratoire dans cette partie fixe. Il en résulte une diminution du coefficient de surtension de la vibration de chacun des résonateurs 28 et 30. Cet inconvénient affecte la précision de la mesure de la fréquence différentielle, et donc la valeur de l'accélération qui en est déduite.

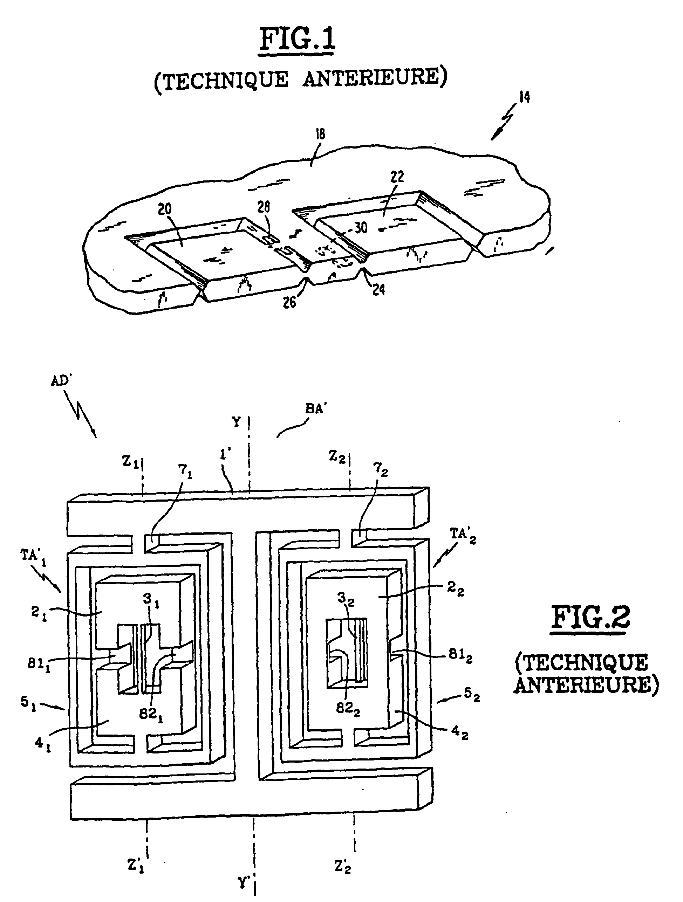

Un autre accéléromètre, objet du brevet publié sous le numéro FR 2 739 190 au nom du demandeur, est montré à la figure 2. Le corps de cet accéléromètre AD' est monolithique et est obtenu par usinage chimique d'une plaque de quartz. Ce corps comprend une partie fixe 1' de contour de face en I, quatre parties massives mobiles en forme de U dont deux masses d'épreuves $2_1$ et $2_2$, deux résonateurs $3_1$ et $3_2$, quatre lamelles d'articulation parallélépipédiques $81_1$, $82_1$, $81_2$, $82_2$ et deux cadres flexibles $5_1$ et $5_2$. Les résonateurs $3_1$ et $3_2$ vibrent en flexion et sont excités par effet piézo-électrique au moyen d'un dispositif (non représenté) en sortie duquel sont délivrées leurs fréquences de résonance. La direction de sensibilité de cet accéléromètre est proche de la perpendiculaire aux faces de la plaque. Une accélération appliquée suivant cette direction provoque une force d'extension sur un résonateur et une force de compression sur l'autre résonateur, le signal de sortie de l'accéléromètre étant la différence des fréquences des deux résonateurs. Cet accéléromètre ne présente plus l'inconvénient de la dissipation d'énergie mécanique vibratoire dans la partie fixe, car la souplesse des cadres $5_1$ et $5_2$ procure un effet de filtrage mécanique entre les résonateurs et la partie fixe. De plus, cet accéléromètre supprime le couplage entre les deux résonateurs (FR 2 739 190, page 7, lignes 31-33). Cet accéléromètre est ainsi bien adapté à des domaines industriels qui demandent d'excellentes précisions et des coût modérés. Par contre, il présente des inconvénients pour les domaines qui exigent des coûts de fabrication extrêmement réduits, en particulier le domaine des automobiles. La relative complexité de la structure montrée à la figure 2 affecte le rendement de fabrication par usinage chimique et limite les possibilités de miniaturisation, ce qui limite corrélativement le nombre de structures réalisables sur un wafer en quartz de dimensions données. Ces inconvénients empêchent d'obtenir un coût de fabrication très bas.

La présente invention propose une forme géométrique qui, tout en évitant des fuites d'énergie mécanique vibratoire des résonateurs vers la partie fixe, est mieux adaptée à la miniaturisation. Le coût de fabrication est ainsi abaissé et permet de satisfaire les besoins industriels en accéléromètres performants et très bon marché.

Selon l'invention, cet accéléromètre monolithique comprenant une partie fixe, deux premières parties massives mobiles appelées masses d'épreuve, deux lamelles d'articulation ayant chacune une extrémité solidaire de l'une des deux parties massives mobiles et deux résonateurs ayant chacun une extrémité solidaire de l'une des deux parties massives mobiles est caractérisé en ce qu'il comprend une troisième partie massive mobile solidaire de l'autre extrémité de chacun des deux résonateurs et de chacune des deux lamelles d'articulation, et un pédoncule flexible situé entre les deux premières parties massives mobiles, et reliant la troisième partie massive mobile à la partie fixe.

La situation du pédoncule entre les deux masses d'épreuve est favorable à l'obtention d'une masse totale des parties mobiles la plus importante possible. La souplesse du pédoncule combinée à la masse totale des trois parties mobiles permet de réaliser un filtre mécanique entre les résonateurs et la partie fixe de l'accéléromètre. Ainsi, les coefficients de surtension des résonateurs sont peu altérés et la précision de la mesure fournie est excellente. De plus, la simplicité de la structure et sa compacité, procurée par la situation du pédoncule entre les deux premières parties massives mobiles, sont favorables à la miniaturisation et à l'obtention d'un bon rendement de fabrication. Par contre, la présence d'une partie massive mobile commune aux deux résonateurs ne permet plus la suppression du couplage mécanique entr'eux et une solution différente doit être trouvée pour résoudre ce problème afin de conserver la précision de l'accéléromètre.

Selon une réalisation préférée, le pédoncule flexible est une poutre sensiblement parallélépipédique s'étendant parallèlement aux résonateurs, et dont la hauteur est nettement supérieure à ses dimensions de section transversale.

Afin d'obtenir l'efficacité maximale du filtre mécanique, l'axe longitudinal de symétrie du pédoncule flexible est sensiblement un axe de symétrie du corps de l'accéléromètre.

De préférence, afin d'en exploiter au mieux les performances, l'accéléromètre est fixé sur une embase dont les grandes faces ne sont pas parallèles entr'elles, ce qui permet à l'axe de sensibilité de l'accéléromètre d'être strictement perpendiculaire au plan du support.

D'autres caractéristiques et avantages de l'invention apparaîtront plus clairement à la lecture de la description détaillée et des figures qui s'y rapportent dans lesquelles :

- les figures 1 et 2 sont des vues en perspective de deux accéléromètres monolithiques appartenant à l'art antérieur et déjà commentés ;
- la figure 3 est une vue en perspective d'un accéléromètre selon une première réalisation de l'invention ;
- la figure 4 est une vue de face de l'accéléromètre de la figure 3 montrant des déformations exagérément agrandies du pédoncule et de l'un des deux résonateurs vibrant en flexion ;
- les figures 5A, 5B et 5C sont des vues en perspective de l'accéléromètre de la figure 3 montrant des efforts mécaniques engendrés respectivement par chacune des trois composantes spatiales de l'accélération;
- la figure 6A est une vue en perspective de l'accéléromètre de la figure 3 montrant sa direction de sensibilité de mesure d'accélération ;
- la figure 6B montre une coupe transversale de la partie fixe de l'accéléromètre de la figure 3, prise selon un plan $\Pi$ perpendiculaire à l'axe Z'Z dans la figure 6A, et une coupe transversale d'une embase prise selon ce même plan $\Pi$, pour expliquer la manière d'orienter l'axe de sensibilité de l'accéléromètre perpendiculairement au plan du support;
- la figure 7A est une vue en perspective d'une variante d'un accéléromètre conforme à l'invention;
- la figure 7B est une vue en perspective d'une autre variante d'un accéléromètre conforme à l'invention, avec des moyens de mise en vibration privilégiant des résonateurs vibrant en flexion, et des moyens de mesure de fréquence associés.

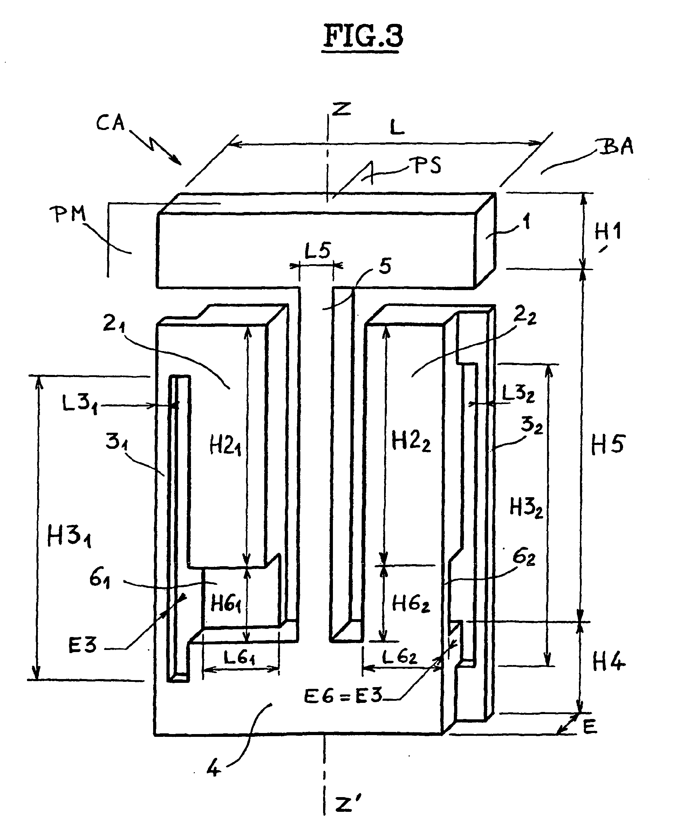

En référence à la figure 3, un accéléromètre CA selon l'invention comprend essentiellement une partie fixe 1, deux premières parties massives mobiles respectivement $2_1$ et $2_2$ constituant des masses d'épreuve, deux résonateurs respectivement $3_1$ et $3_2$ constituant les éléments sensibles, une troisième partie massive mobile 4 et un pédoncule flexible 5. Selon la réalisation illustrée à la figure 3, l'accéléromètre CA constitue un corps monolithique usiné dans une même plaque de matériau, tel que du quartz ou du silicium, d'épaisseur uniforme E, de largeur L et de hauteur H1 + H5 + H4. L'accéléromètre CA a la forme générale d'un parallélépipède dont la hauteur s'étend suivant un axe central Z'Z. Cet axe Z'Z est contenu d'une part dans un plan médian PM de la plaque parallèle aux faces de celle-ci, et d'autre part dans un plan PS perpendiculaire aux faces de la plaque. Le plan PS est un plan de symétrie de la plaque et l'axe Z'Z est sensiblement un axe de symétrie de l'accéléromètre.

La partie fixe 1 constitue un pavé parallélépipédique d'épaisseur E, de largeur L et de hauteur H1 disposé à une extrémité du corps de l'accéléromètre selon l'axe Z'Z et est destinée à être solidaire de la structure d'un engin (non représentée) par l'intermédiaire d'une embase BA. La partie fixe 1 est fixée sur l'embase BA par exemple par collage.

Chaque partie mobile, $2_1$ et $2_2$, a une forme sensiblement parallélépipédique d'épaisseur E et de hauteur, respectivement $H2_1$ et $H2_2$, disposée parallèlement à l'axe central Z'Z de l'accéléromètre. Selon la réalisation illustrée, les parties mobiles $2_1$ et $2_2$ ont sensiblement la même géométrie, sont disposées de part et d'autre du plan PS et ont chacune une section terminale en regard de la partie fixe 1.

Selon la réalisation illustrée, chaque résonateur $3_1$ et $3_2$ est une lame parallélépipédique dont la hauteur, respectivement $H3_1$ et $H3_2$, s'étend parallèlement à l'axe Z'Z et dont la section rectangulaire transversale est définie par une épaisseur E3 prise suivant l'épaisseur E de l'accéléromètre CA et par une largeur, respectivement $L3_1$ et $L3_2$, prise suivant la largeur L de l'accéléromètre CA. Selon la réalisation illustrée, les résonateurs $3_1$ et $3_2$ ont sensiblement la même géométrie. Les résonateurs $3_1$ et $3_2$ ont chacun une extrémité solidaire d'une des parties mobiles, respectivement $2_1$ et $2_2$, au voisinage de leurs sections terminales en regard de la partie fixe 1. Selon la figure 3, ils sont situés le long des bords des parties mobiles $2_1$ et $2_2$ les plus éloignés de l'axe Z'Z, c'est à dire opposés à ceux en regard du pédoncule flexible 5. Un côté du résonateur $3_1$ tourné vers l'extérieur du corps est coplanaire à l'une des deux grandes faces de la plaque de matériau. Un côté du résonateur $3_2$ tourné vers l'extérieur du corps est coplanaire à l'autre grande face de la plaque. Selon la réalisation illustrée, un autre côté du résonateur $3_1$ tourné vers l'extérieur du corps est coplanaire à l'une des deux faces de la plaque parallèles au plan PS, et un autre côté du résonateur $3_2$ tourné vers l'extérieur du corps est coplanaire à l'autre face de la plaque parallèle au plan PS. Chacun des résonateurs $3_1$ et $3_2$ est muni d'électrodes de mise en vibration à sa fréquence de résonance (non représentées) destinées à être couplées à un circuit oscillateur. Les résonateurs $3_1$ et $3_2$ travaillent de préférence en vibration de flexion ou de torsion, car les fréquences de ces vibrations sont très sensibles aux forces d'extension ou de compression qui s'exercent longitudinalement aux résonateurs lorsque les parties massives mobiles $2_1$ et $2_2$ constituant les masses d'épreuves sont soumises à une accélération.

Comme expliqué dans le brevet publié sous le numéro FR 2 739 190 déjà cité (page 13, ligne 23 - page 14, ligne 9), les résonateurs $3_1$ et $3_2$ peuvent avoir d'autres constitutions que celle d'une lame parallélépipédique. De même, s'agissant des électrodes de mise en vibration, différentes constitutions sont possibles, comme par exemple celles à deux ou trois bandes conductrices décrites dans le brevet publié sous le numéro FR 2 685 964 au nom du demandeur.

Selon la réalisation illustrée à la figure 3, la troisième partie mobile 4 constitue un pavé de forme sensiblement parallélépipédique d'épaisseur E et de hauteur H4, disposé à l'autre extrémité longitudinale du corps de l'accéléromètre, perpendiculairement à l'axe central Z'Z, et solidaire de l'autre extrémité de chacun des résonateurs $3_1$ et $3_2$,

Toujours selon la réalisation illustrée à la figure 3, le pédoncule flexible 5 constitue une poutre parallélépipédique dont la hauteur H5 s'étend parallèlement à l'axe Z'Z et dont la section rectangulaire transversale est définie par une épaisseur E et une largeur L5 prises respectivement suivant l'épaisseur E et la largeur L de l'accéléromètre CA. La largeur L5 du pédoncule flexible est du même ordre de grandeur que son épaisseur E; L5 est généralement comprise entre la moitié et le double de l'épaisseur E. Par contre, la hauteur H5 du pédoncule flexible est nettement supérieure à son épaisseur E ; H5 est généralement comprise entre cinq et vingt fois l'épaisseur E. Les plans PM et PS sont des plans de symétrie du pédoncule flexible 5, qui est ainsi situé entre les deux premières parties massives mobiles $2_1$ et $2_2$. Le pédoncule flexible 5 est solidaire à ses deux extrémités de la partie fixe 1 et de la troisième partie mobile 4 respectivement. Ainsi, la partie fixe 1, le pédoncule flexible 5 et la troisième partie mobile 4 forment les trois branches d'un I. Le pédoncule flexible 5 peut avoir d'autres constitutions que celle de la poutre parallélépipédique selon la réalisation illustrée à la figure 3. Par exemple, la largeur L5 peut évoluer de façon continue ou discontinue le long de la hauteur H5 du pédoncule flexible. S'agissant du pédoncule flexible 5, il doit être entendu que la portée de la présente demande de brevet s'étend à de telles variantes.

Le corps monolithique de l'accéléromètre CA comprend également deux lamelles d'articulation $6_1$ et $6_2$ parallélépipédiques dont les hauteurs, respectivement $H6_1$ et $H6_2$, sont prises suivant l'axe Z'Z et dont les largeurs, respectivement $L6_1$ et $L6_2$, sont prises suivant la largeur L de l'accéléromètre CA. Les lamelles $6_1$ et $6_2$ ont une épaisseur E6 prise suivant l'épaisseur E de la plaque égale à l'épaisseur E3 des résonateurs $3_1$ et $3_2$. Selon la réalisation illustrée, les lamelles $6_1$ et $6_2$ ont sensiblement la même géométrie. Les largeurs $L6_1$ et $L6_2$ des lamelles sont nettement supérieures à leur épaisseur E6, ce qui permet de réduire la sensibilité de l'accéléromètre à la composante de l'accélération perpendiculaire au plan PS. Le comportement mécanique de l'accéléromètre soumis aux trois composantes spatiales de l'accélération sera expliqué plus en détail ultérieurement. Les largeurs $L6_1$ et $L6_2$ des lamelles sont généralement comprises entre 5 et 50 fois leur épaisseur E6. Les lamelles $6_1$ et $6_2$ ont chacune une extrémité solidaire de l'une des deux premières parties mobiles, respectivement $2_1$ et $2_2$, au niveau des sections terminales desdites parties mobiles les plus proches de la troisième partie mobile 4. L'autre extrémité de chacune des lamelles $6_1$ et $6_2$ est solidaire de la partie mobile 4. Une face de la lamelle $6_1$ tournée vers l'extérieur du corps de l'accéléromètre est coplanaire à la grande face de la plaque de matériau coplanaire à un côté du résonateur $3_2$. De façon similaire, une face de la lamelle $6_2$ tournée vers l'extérieur du corps est coplanaire à la grande face de la plaque coplanaire à un côté du résonateur $3_1$. L'épaisseur, E3 ou E6, des résonateurs et des lamelles est inférieure à la moitié de l'épaisseur E de la plaque. Généralement, cette épaisseur, E3 ou E6, est comprise entre un quart et un vingtième de l'épaisseur E de la plaque.

Comme expliqué dans le brevet publié sous le numéro FR 2 739 190 déjà cité (page 16, ligne 33 - page 17, ligne 18), les formes et les dimensions des résonateurs et des lamelles autorisent l'usinage chimique en une seule étape pour fabriquer le corps monolithique de l'accéléromètre CA. L'usinage chimique est ainsi effectué simultanément à partir des deux faces de la plaque jusqu'à atteindre une profondeur de gravure valant (E - E3).

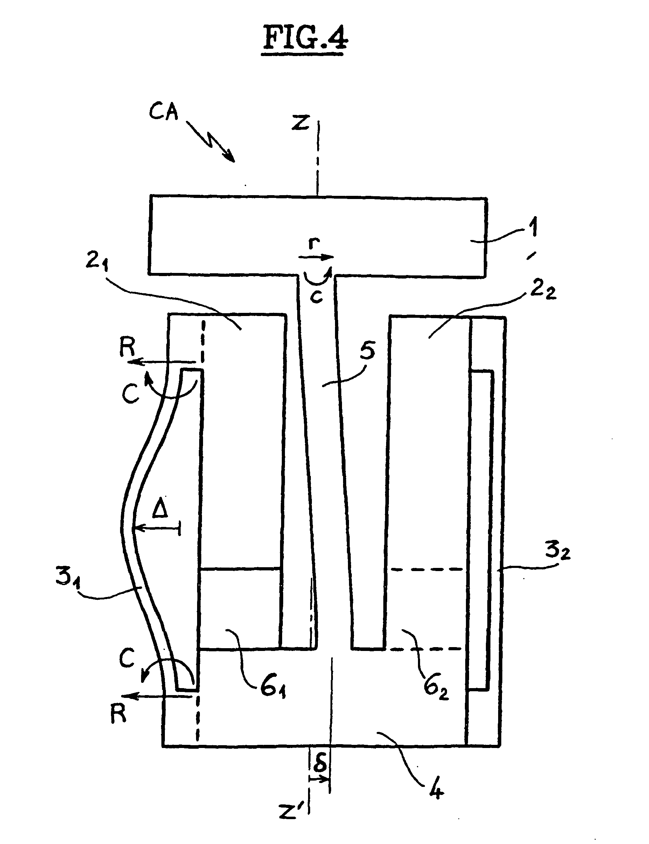

Le fonctionnement de l'accéléromètre est maintenant présenté en référence à la figure 4 qui montre des avantages de la disposition particulière de la troisième partie mobile 4 et du pédoncule flexible 5. La figure 4 est une vue de face de l'accéléromètre CA de la figure 3 lorsque le résonateur $3_1$ vibre en flexion en mode fondamental, parallèlement aux faces de la plaque de matériau. Les déformations du résonateur $3_1$ et du pédoncule flexible 5 correspondent à des amplitudes de vibration et ont été exagérément agrandies pour faciliter la compréhension du dessin. Lorsque le résonateur $3_1$ vibre en flexion à sa fréquence de résonance $F_1$, il applique au niveau de chacune de ses extrémités, solidaires des parties mobiles 2, et 4, un effort tranchant R et un moment fléchissant C alternatifs. Ces parties mobiles subissent de ce fait des déplacements alternatifs dont la composante principale δ est une translation parallèle aux faces de la plaque et perpendiculaire à l'axe longitudinal central Z' Z. Ce déplacement alternatif δ est également imposé à la partie mobile $2_2$ par l'intermédiaire principalement de la lamelle $6_2$. Les trois parties massives mobiles $2_1$, $2_2$ et 4 constituent ainsi un "équipage mobile" dont la masse est beaucoup plus grande que celle du résonateur vibrant $3_1$. De ce fait, le déplacement alternatif δ dudit équipage mobile est beaucoup plus petit que l'amplitude Δ de vibration du résonateur $3_1$. Ce petit déplacement alternatif δ crée une vibration en flexion de faible amplitude du pédoncule flexible 5. Ledit pédoncule étant souple en flexion, la partie fixe 1 ne reçoit que de très faibles efforts alternatifs, principalement une force r et un couple c dont les intensités sont très inférieures à celles respectivement de l'effort tranchant R et du moment fléchissant C appliqués par le résonateur $3_1$ sur chacune des parties mobiles $2_1$, et 4. À titre d'exemple, des efforts r et c peuvent être obtenus cent fois plus petits que les efforts R et C respectivement. Ainsi, la souplesse du pédoncule 5 et la masse totale des trois parties mobiles $2_1$, $2_2$ et 4 caractérisent un filtre mécanique entre le résonateur $3_1$ et la partie fixe 1 de l'accéléromètre, ladite partie fixe étant très peu sollicitée par les vibrations du résonateur. Le coefficient de surtension du résonateur n'est donc pratiquement pas altéré. On rappelle que les déplacements et déformations alternatifs dont les amplitudes sont représentées sur la figure 4 constituent les phénomènes vibratoires principaux mis en jeu dans l'accéléromètre. Dans la réalité, il coexiste d'autres phénomènes vibratoires, d'amplitudes plus petites, tels que par exemple une rotation alternative de l'équipage mobile constitué des trois parties mobiles $2_1$, $2_2$ et 4 autour de l'axe longitudinal central Z'Z. Cette rotation alternative de l'équipage mobile est provoquée par les vibrations en flexion du résonateur $3_1$ et est due au fait que le plan moyen dans lequel s'effectuent ces vibrations ne passe pas par l'axe Z'Z qui est sensiblement un axe principal d'inertie de l'équipage mobile. La rotation alternative de l'équipage mobile engendre autour de l'axe Z'Z une torsion alternative du pédoncule flexible 5 dont la souplesse en torsion permet de ne transmettre à la partie fixe 1 qu'un très faible couple alternatif autour de l'axe Z'Z. Ce très faible couple n'a qu'une influence négligeable sur l'efficacité du filtrage mécanique des vibrations du résonateur. D'une façon plus générale, grâce à la souplesse du pédoncule 5, celui-ci filtre efficacement la plupart des sollicitations mécaniques alternatives provoquées par les vibrations du résonateur $3_1$. Toutefois, afin que le filtrage mécanique soit le plus efficace, il est préférable que l'axe longitudinal central Z'Z soit sensiblement un axe de symétrie de l'accéléromètre CA, comme représenté sur la figure 3. Dans une variante où cette symétrie n'est pas sensiblement respectée, les efforts mécaniques alternatifs transmis à la partie fixe 1 ont des intensités supérieures à celles correspondant à la réalisation sensiblement symétrique, mais en général nettement inférieures aux intensités des efforts alternatifs R et C appliqués par le résonateur $3_1$ sur chacune des parties mobiles $2_1$ et 4.

Une interprétation des phénomènes vibratoires vient d'être présentée en référence à la figure 4 dans le cas où le résonateur $3_1$ vibre en flexion à sa fréquence de résonance $F_1$. Dans le cas où c'est le résonateur $3_2$ qui vibre en flexion à sa fréquence de résonance $F_2$, l'interprétation des phénomènes vibratoires est similaire. Ainsi, la souplesse du pédoncule 5 et la masse totale des trois parties mobiles $2_1$, $2_2$ et 4 caractérisent également un filtre mécanique entre le résonateur $3_2$ et la partie fixe 1 de l'accéléromètre.

Dans le cas où les deux résonateurs $3_1$ et $3_2$ vibrent simultanément à leurs fréquences de résonance $F_1$ et $F_2$ respectivement, l'interprétation des phénomènes vibratoires est également similaire. Les deux vibrations coexistent, pratiquement indépendantes l'une de l'autre, et le filtrage mécanique entre les résonateurs et la partie fixe de l'accéléromètre permet que ladite partie fixe soit très peu sollicitée par les vibrations des résonateurs et donc que les coefficients de qualité desdits résonateurs ne soient pratiquement pas altérés. La précision de la mesure déduite de la fréquence différentielle $(F_1 - F_2)$ est ainsi excellente et sensiblement aussi bonne que celle du second accéléromètre connu AD' représenté sur la figure 2.

De plus, la structure de l'accéléromètre selon l'invention est plus simple que celle du second accéléromètre connu, et comporte moins de parties susceptibles d'être affectées par un défaut de réalisation par usinage chimique, car dans la pratique ces défauts sont de petites dimensions comparées aux dimensions des accéléromètres. Dans le cas de l'accéléromètre selon l'invention, les parties sensibles à un défaut de réalisation sont essentiellement les résonateurs $3_1$ et $3_2$, alors que dans le cas du second accéléromètre connu AD' représenté sur la figure 2 les parties sensibles sont essentiellement les résonateurs $3_1$ et $3_2$ et les cadres flexibles $5_1$ et $5_2$. Ainsi, la structure de l'accéléromètre selon l'invention permet d'obtenir un meilleur rendement de fabrication que la structure du second accéléromètre connu. De plus, la situation du pédoncule flexible 5 entre les deux premières parties mobiles $2_1$ et $2_2$ permet que la structure de l'accéléromètre selon l'invention soit compacte et ainsi, compte tenu de sa simplicité, de plus petite taille que la structure du second accéléromètre connu. Ainsi, cette possibilité de miniaturiser davantage permet de réaliser un plus grand nombre d'accéléromètres sur un wafer de dimensions données. Ces deux avantages que constituent un meilleur rendement de fabrication et un plus grand nombre d'accéléromètres usinés sur un wafer permettent que le coût de fabrication de l'accéléromètre CA selon l'invention soit beaucoup plus bas que celui du second accéléromètre connu AD'.

Si le pédoncule flexible 5 n'était pas situé entre les deux premières parties mobiles $2_1$ et $2_2$ et si de plus l'axe longitudinal central Z'Z restait sensiblement un axe de symétrie de l'accéléromètre pour bénéficier du filtrage mécanique le plus efficace comme expliqué antérieurement, la structure dudit accéléromètre ne serait pas compacte car la partie fixe 1, le pédoncule 5, la troisième partie mobile 4, les deux lamelles $6_1$ et $6_2$ et les deux premières parties mobiles $2_1$ et $2_2$ seraient échelonnés dans cet ordre suivant la hauteur de l'accéléromètre qui vaudrait ainsi H1 + H5 + H4 + $H6_1$ + $H2_1$ et H1 + H5 + H4 + $H6_2$ + $H2_2$ de part et d'autre du plan PS respectivement. Selon l'invention, la situation du pédoncule flexible entre les deux premières parties mobiles permet de limiter la hauteur de l'accéléromètre à H1 + H5 + H4.

L'accéléromètre selon la réalisation illustrée à la figure 3 s'accommode également de résonateurs $3_1$ et $3_2$ vibrant en flexion parallèlement au plan PS, c'est-à-dire transversalement aux faces de la plaque de matériau. Dans ce cas, les efforts mécaniques alternatifs appliqués par les résonateurs sur les parties mobiles $2_1$, $2_2$ et 4 sont parallèles au plan PS, et l'équipage mobile constitué desdites parties mobiles subit de ce fait des petits déplacements alternatifs dont les composantes principales sont des translations perpendiculaires aux faces de la plaque de matériau et des rotations autour de l'axe longitudinal central Z'Z. Ces petits déplacements alternatifs en translation et en rotation de l'équipage mobile créent des vibrations, respectivement en flexion et en torsion, du pédoncule flexible 5. De façon analogue au cas précédent des résonateurs vibrant en flexion parallèlement aux faces de la plaque de matériau, les faibles amplitudes de ces vibrations du pédoncule et la souplesse dudit pédoncule en flexion et en torsion permettent que la partie fixe 1 ne reçoive que de très faibles efforts alternatifs. Les coefficients de surtension des résonateurs ne sont donc pratiquement pas altérés.

L'accéléromètre selon la réalisation illustrée à la figure 3 s'accommode également de résonateurs $3_1$ et $3_2$ vibrant en torsion autour de leurs axes longitudinaux respectifs parallèles à l'axe Z'Z. Dans ce cas, chacun des résonateurs $3_1$ et $3_2$ applique un couple alternatif sur chacune des deux parties mobiles qui lui sont solidaires, et l'équipage mobile constitué des trois parties mobiles $2_1$, $2_2$ et 4 subit de ce fait des petits déplacements alternatifs en rotation autour de l'axe Z'Z. Il en résulte des vibrations en torsion de très faibles amplitudes du pédoncule flexible 5 dont la souplesse permet que la partie fixe 1 ne reçoive que de très faibles efforts alternatifs. Les coefficients de surtension des résonateurs ne sont donc pratiquement pas altérés. D'une façon analogue aux cas des résonateurs vibrant en flexion, il est également préférable que l'axe longitudinal central Z'Z soit sensiblement un axe de symétrie de l'accéléromètre, comme représenté sur la figure 3, afin que le filtrage mécanique des vibrations en torsion soit le plus efficace.

Grâce au pédoncule flexible 5, les fuites d'énergie mécanique vers la partie fixe 1 aux fréquences de résonance des résonateurs $3_1$ et $3_2$ (quelques dizaines de kHz) sont diminuées tant pour les vibrations de flexion que de torsion. Cependant la tenue mécanique du transducteur n'est pas dégradée dans la bande passante d'utilisation (du continu à quelques centaines de Hz).

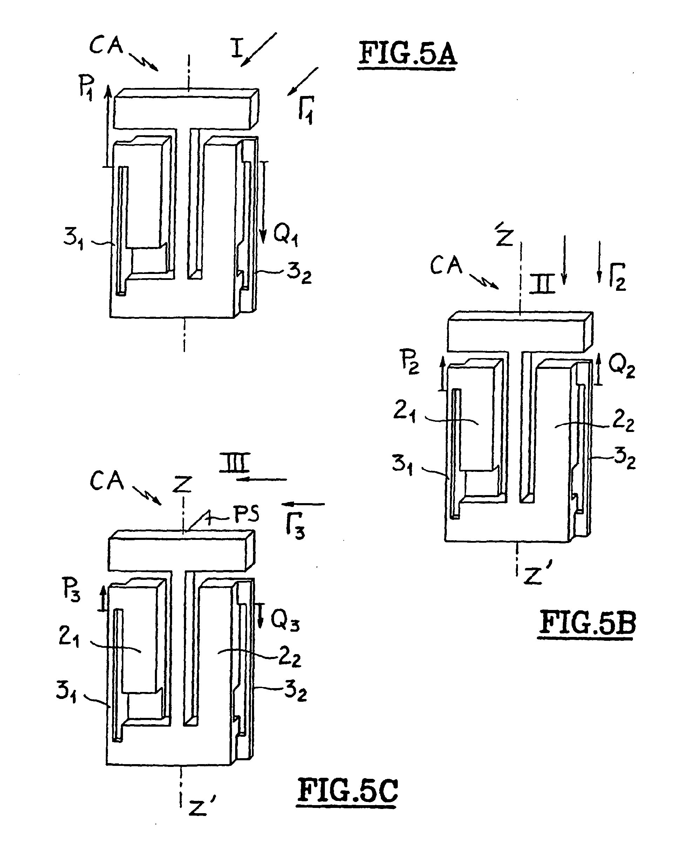

Le fonctionnement de l'accéléromètre est maintenant présenté en référence aux figures 5A, 5B et 5C qui montrent le comportement mécanique des résonateurs $3_1$ et $3_2$ de l'accéléromètre soumis aux trois composantes spatiales de l'accélération. Les figures 5A, 5B et 5C sont des vues en perspective de l'accéléromètre CA de la figure 3, destinées à montrer les efforts mécaniques d'extension et de compression exercés par les parties mobiles $2_1$ et $2_2$ sur les résonateurs $3_1$ et $3_2$ respectivement, lorsque l'accéléromètre est soumis à chacune des trois composantes spatiales de l'accélération.

En se référant à la figure 5A, l'accélération $\Gamma_1$ appliquée suivant un axe I perpendiculaire aux faces de la plaque de matériau provoque sur le résonateur $3_1$ une force d'extension longitudinale $P_1$, et sur le résonateur $3_2$ une force de compression longitudinale $Q_1$.

La force $P_1$ d'extension que subit le résonateur $3_1$ est la cause d'une augmentation $(\Delta F_1)_1$ de sa fréquence de résonance $F_1$ :

$$(\Delta F_1)_1 = + k_1 \, \Gamma_1$$

La force $Q_1$ de compression que subit le résonateur $3_2$ est la cause d'une diminution $(\Delta F_2)_1$ de sa fréquence de résonance $F_2$ :

$$(\Delta F_2)_1 = - k'_1 \, \Gamma_1$$

où $k_1$ et $k'_1$ sont des coefficients de signe positif dépendant exclusivement des caractéristiques mécaniques et géométriques de l'accéléromètre CA, c'est-à-dire essentiellement de ses dimensions, des coefficients élastiques et de la masse volumique du matériau, ainsi que de la nature des vibrations des résonateurs $3_1$ et $3_2$, par exemple flexion en mode fondamental.

La fréquence différentielle $(F_1 - F_2)$ subit ainsi une variation $[\Delta(F_1 - F_2)]_1$ :

$$[\Delta(F_1 - F_2)]_1 = (\Delta F_1)_1 - (\Delta F_2)_1 = k_1\Gamma_1 - (-k'_1\Gamma_1) = (k_1 + k'_1)\Gamma_1$$

Ainsi, la variation de la fréquence différentielle $(F_1 - F_2)$ est proportionnelle à l'accélération $\Gamma_1$, et le coefficient de cette proportionnalité est la somme des coefficients $k_1$ et $k'_1$. On notera que l'expression de la variation $[\Delta(F_1 - F_2)]_1$ de la fréquence différentielle est algébrique, ce qui traduit le fait que ladite variation change de signe lorsque l'accélération $\Gamma_1$ change de sens.

En se référant à la figure 5B, l'accélération $\Gamma_2$ appliquée suivant un axe II parallèle à l'axe Z'Z provoque des forces d'extension longitudinale $P_2$ et $Q_2$ sur les résonateurs $3_1$ et $3_2$ respectivement.

Ces forces d'extension sont les causes d'augmentation $(\Delta F_2)_2$ et $(\Delta F_2)_2$ des fréquences de résonance des résonateurs $3_1$ et $3_2$ respectivement :

$$(\Delta F_1)_2 = + k_2\Gamma_2$$

$$(\Delta F_2)_2 = + k'_2\Gamma_2$$

où $k_2$ et $k'_2$ sont des coefficients de signe positif dépendant exclusivement des caractéristiques mécaniques et géométriques de l'accéléromètre CA.

La fréquence différentielle $(F_1 - F_2)$ subit ainsi une variation $[\Delta(F_1 - F_2)]_2$ :

$$[\Delta(F_1 - F_2)]_2 = (k_2 - k'_2)\Gamma_2$$

Ainsi, la variation de la fréquence différentielle $(F_1 - F_2)$ est proportionnelle à l'accélération $\Gamma_2$, et le coefficient de cette proportionnalité est la différence des coefficients $k_2$ et $k'_2$. On notera que la variation de fréquence est algébrique.

En se référant à la figure 5C, l'accélération $\Gamma_3$ appliquée suivant un axe III perpendiculaire au plan PS de l'accéléromètre provoque sur le résonateur $3_1$ une force d'extension longitudinale $P_3$, et sur le résonateur $3_2$ une force de compression longitudinale $Q_3$ .

La force $P_3$ d'extension que subit le résonateur $3_1$ est la cause d'une augmentation $(\Delta F_1)_3$ de sa fréquence de résonance $F_1$ :

$$(\Delta F_1)_3 = + k_3\Gamma_3$$

La force $Q_3$ de compression que subit le résonateur $3_2$ est la cause d'une diminution $(DF_2)_3$ de sa fréquence de résonance $F_2$ :

$$(DF_2)_3 = - k'_3G_3$$

où $k_3$ et $k'_3$ sont des coefficients de signe positif dépendant exclusivement des caractéristiques mécaniques et géométriques de l'accéléromètre CA.

La fréquence différentielle $(F_1 - F_2)$ subit ainsi une variation $[D(F_1- F_2)]_3$:

$$[D(F_1 - F_2)]_3 = (k_3 + k'_3)G_3$$

Ainsi, la variation de la fréquence différentielle $(F_1 - F_2)$ est proportionnelle à l'accélération $G_3$, et le coefficient de cette proportionnalité est la somme des coefficients $k_3$ et $k'_3$. On notera que la variation de fréquence est algébrique.

Connaissant les variations de la fréquence différentielle $(F_1-F_2)$ pour les trois composantes $G_1$, $G_2$ et $G_3$ de l'accélération, il est possible d'écrire la variation de la fréquence différentielle résultant de l'application d'une accélération G d'orientation quelconque par rapport à l'accéléromètre CA, cette accélération G étant définie par ses trois composantes

$G_1$, $G_2$ et $G_3$ prises suivant les trois axes principaux, respectivement I, II et III, de l'accéléromètre CA :

$$D(F_1 - F_2) = [D(F_1 - F_2)]_1 + [D(F_1 - F_2)]_2 + [D(F_1 - F_2)]_3$$
$$= (k_1 + k'_1) \, G_1 + (k_2 - k'_2) \, G_2 + (k_3 + k'_3) \, G_3$$

Les coefficients $(k_1 + k'_1)$, $(k_2 - k'_2)$ et $(k_3 + k'_3)$ peuvent être interprétés comme les trois composantes d'un vecteur K prises suivant les trois axes principaux I, II et III respectivement, ce qui permet d'écrire la variation $D(F_1 - F_2)$ de la fréquence différentielle sous la forme d'un produit scalaire :

$$D(F_1 - F_2) = K.G$$

Puisque les coefficients $k_1$, $k'_1$, $k_2$, $k'_2$, $k_3$ et $k'_3$ dépendent exclusivement des caractéristiques mécaniques et géométriques de l'accéléromètre CA, il en est de même des trois composantes $(k_1 + k'_1)$, $(k, - k'_2)$ et $(k_3 + k'_3)$ du vecteur K qui est ainsi un vecteur dont l'orientation et l'intensité sont particulières à l'accéléromètre CA.

Ainsi, l'écriture de la variation $D(F_1 - F_2)$ sous la forme du produit scalaire K.G montre que ladite variation est nulle lorsque l'accélération G est perpendiculaire au vecteur K, et qu'elle est maximale lorsque l'accélération G est parallèle au vecteur K. Autrement dit, la fréquence différentielle $D(F_1 - F_2)$ n'est sensible qu'à la composante de G parallèle au vecteur K, ou bien encore l'accéléromètre CA est un accéléromètre dont l'unique axe de sensibilité est parallèle au vecteur K.

Pour faciliter l'écriture de ce qui va suivre, nous désignerons ce vecteur K sous le nom de vecteur de sensibilité de mesure d'accélération.

Lorsque la géométrie de l'accéléromètre CA respecte certaines conditions, l'orientation du vecteur K peut être voisine de celle de l'axe I perpendiculaire aux faces de la plaque de matériau. C'est notamment le cas de la réalisation illustrée à la figure 3, ainsi que nous le montrons dans ce qui suit.

Selon la réalisation illustrée à la figure 3, la partie mobile $2_1$, le résonateur $3_1$ et la lamelle $6_1$ ont sensiblement la même géométrie que la partie mobile $2_2$, le résonateur $3_2$ et la lamelle $6_2$ respectivement ; il en résulte, dans le cas de l'accélération $G_2$ illustré à la figure 5B, que les forces d'extension longitudinale $P_2$ et $Q_2$ sont sensiblement égales et que les augmentations $(DF_1)_2 = + k_2 G_2$ et $(DF_2)_2 = + k'_2 G_2$ des fréquences de résonance des résonateurs $3_1$ et $3_2$ respectivement sont de même sensiblement égales, ce qui se traduit par $k_2 \approx k'_2$. Ainsi, la composante $(k_2 \sim k'_2)$ du vecteur K prise suivant l'axe II parallèle à l'axe Z'Z est sensiblement nulle.

Toujours selon la réalisation illustrée à la figure 3, les largeurs $L6_1$ et $L6_2$ des lamelles $6_1$ et $6_2$ respectivement sont nettement supérieures à leur épaisseur E6 ; il en résulte que les raideurs desdites lamelles sont nettement plus grandes suivant la largeur L de l'accéléromètre CA que suivant son épaisseur E, ce qui permet que les forces longitudinales $P_3$ et $Q_3$ exercées sur les résonateurs dans le cas d'une accélération $G_3$ illustré à la figure 5C soient nettement plus faibles que les forces longitudinales $P_1$ et $Q_1$ exercées sur les résonateurs dans le cas d'une accélération $G_1$ illustrée à la figure 5A, pour la même intensité des accélérations $G_3$ et $G_1$. Il en résulte, toujours pour la même intensité des accélérations $G_3$ et $G_1$, que les variations de fréquence $(DF_1)_3 = + k_3 G_3$ et $(DF_2)_3 = - k'_3 G_3$ sont nettement plus faibles que les variations de fréquence $(DF_1)_1 = + k_1 G_1$ et $(DF_2)_1 = - k'_1 G_1$ respectivement, ce qui se traduit par $k_3 \ll k_1$ et $k'_3 \ll k'_1$. Ainsi, la composante $(k_3 + k'_3)$ du vecteur K prise suivant l'axe III perpendiculaire au plan PS est très inférieure à la composante $(k_1 + k'_1)$ du vecteur K prise suivant l'axe I perpendiculaire aux faces de la plaque de matériau. À titre d'exemple, il est possible d'obtenir $(k_3 + k'_3) = (k_1 + k'_2) / 100$.

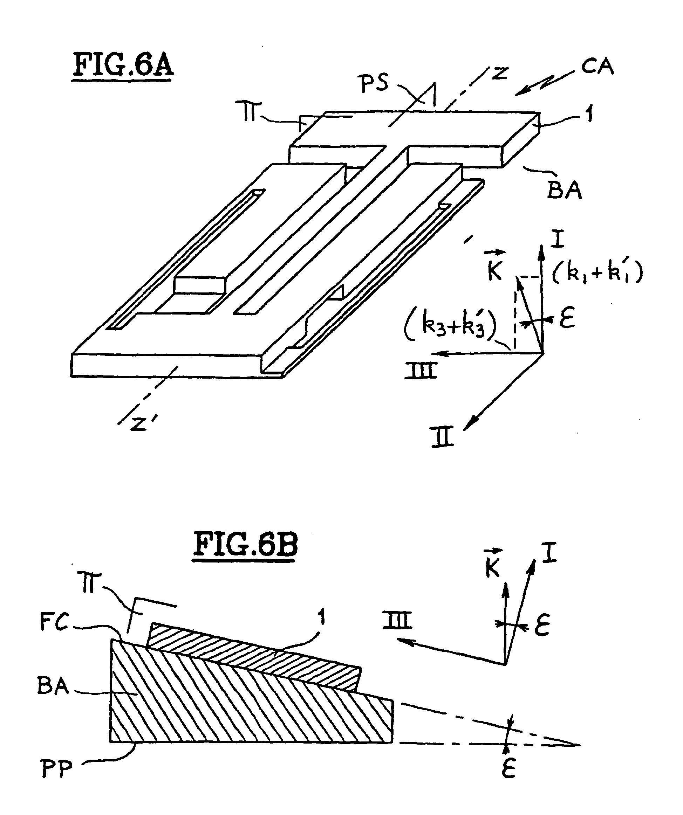

La figure 6A montre l'orientation du vecteur K de sensibilité de mesure d'accélération par rapport aux trois axes principaux de l'accéléromètre CA selon la réalisation illustrée à la figure 3. La composante $(k_2 - k'_2)$ prise suivant l'axe II étant sensiblement nulle et la composante $(k_3 + k'_3)$ prise suivant l'axe III étant très inférieure à la composante $(k_1 + k'_1)$ prise suivant l'axe I, l'orientation du vecteur K est voisine de celle de l'axe I. Autrement dit, l'axe de sensibilité de cet accéléromètre CA est approximativement perpendiculaire aux faces de la plaque de matériau. Comme illustré à la figure 6A, le vecteur K est contenu dans un plan sensiblement parallèle aux axes I et III et présente une inclinaison, caractérisée par un petit angle ε, par rapport à l'axe I. Pour l'exemple indiqué où $(k_3 + k'_3) = (k_1 + k'_1) / 100$, ε vaut environ 0,01 radian et a été exagérément agrandi sur la figure 6A pour faciliter la compréhension du dessin.

Pour les applications où la simplicité d'utilisation est un facteur important, il est intéressant de réaliser une compensation de l'inclinaison ε. Un exemple d'une telle compensation est illustré à la figure 6B qui montre une coupe transversale de l'accéléromètre CA de la figure 6A, prise selon un plan II orthogonal à l'axe Z'Z et situé au niveau de la partie fixe 1. Ladite partie fixe est fixée sur une embase BA, par exemple par collage. Selon la réalisation illustrée, l'embase BA est une plaque dont la face FC collée sur la partie fixe 1 et la face PP qui lui est opposée ne sont pas des faces parallèles entr'elles ; la face PP est appelée "plan de pose" de l'accéléromètre et est destinée à être fixée sur la structure d'un engin (non représenté). Les traces des faces FC et PP dans le plan II de coupe transversale sont inclinées l'une par rapport à l'autre d'un angle égal à l'angle $\varepsilon$ d'inclinaison du vecteur K par rapport à l'axe I, de telle sorte que le vecteur K soit perpendiculaire à la face PP de l'embase BA. Ainsi, l'accéléromètre selon l'invention n'est sensible qu'à la composante de l'accélération orthogonale à la face PP. Cette configuration est généralement appréciée par les utilisateurs d'accéléromètres, du fait de sa simplicité de mise en oeuvre.

Il existe d'autres moyens qui permettent que le vecteur K de sensibilité de mesure d'accélération de l'accéléromètre selon l'invention soit perpendiculaire au plan de pose PP de l'embase BA, et qui permettent de plus que les faces FC et PP de ladite embase soient parallèles entr'elles. Ces moyens concernent l'accéléromètre seul et permettent que le vecteur K soit parallèle à l'axe I perpendiculaire aux faces de la plaque de matériau, ce qui est obtenu en annulant la composante du vecteur K prise suivant l'axe III perpendiculaire au plan PS.

Un premier moyen (non représenté) d'annuler ladite composante consiste à disposer l'un des deux résonateurs entre la masse d'épreuve qui lui est solidaire et le pédoncule flexible, l'autre résonateur étant disposé selon la réalisation illustrée aux figures 3 et 5C. Ces dispositions des résonateurs permettent qu'une accélération $G_3$ appliquée suivant l'axe III provoque des forces longitudinales de même intensité et de même sens sur les deux résonateurs. Ainsi, les variations résultantes de fréquence des deux résonateurs peuvent être identiques en grandeur et en signe et la variation de la fréquence différentielle peut donc être nulle. Ainsi, la composante du vecteur K prise suivant l'axe III est nulle.

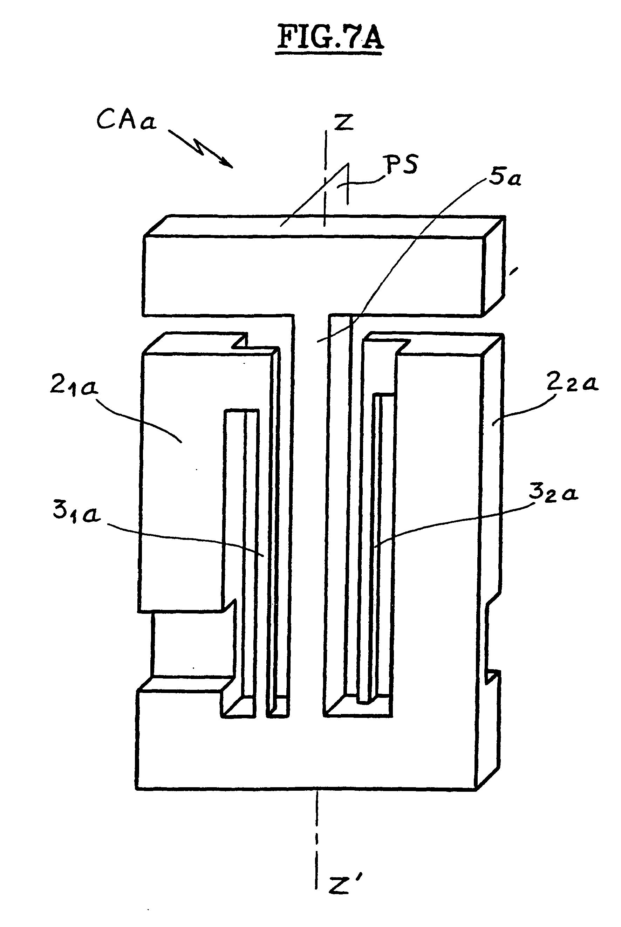

Un second moyen (non représenté) d'annuler ladite composante consiste à réaliser des masses d'épreuves en forme de U, de même qu'expliqué dans le brevet publié sous le numéro FR 2 739 190 déjà cité (figure 7C et page 26, lignes 23-30). Ainsi, une accélération $G_3$ ne provoque pas de force longitudinale sur les résonateurs et la variation résultante de fréquence de chacun des résonateurs est nulle. Ainsi, la variation correspondante de la fréquence différentielle et la composante du vecteur K prise suivant l'axe III sont nulles.

La figure .7A montre une autre réalisation d'accéléromètre selon l'invention. L'accéléromètre $CA_a$ diffère de l'accéléromètre CA de la figure 3 principalement par la disposition de chacun des résonateurs $3_{1a}$ et $3_{2a}$ entre la masse d'épreuve qui lui est solidaire et le pédoncule flexible $5_a$. Selon la réalisation illustrée, un côté de la masse d'épreuve $2_{1a}$ tourné vers l'extérieur du corps est coplanaire à l'une des deux faces de la plaque parallèles au plan PS, et un côté de la masse d'épreuve $2_{2a}$ tourné vers l'extérieur du corps est coplanaire à l'autre face de la plaque parallèle au plan PS. Cette réalisation permet de bénéficier des mêmes avantages que ceux de la réalisation illustrée à la figure 3, concernant la précision de la mesure et le coût de réalisation.

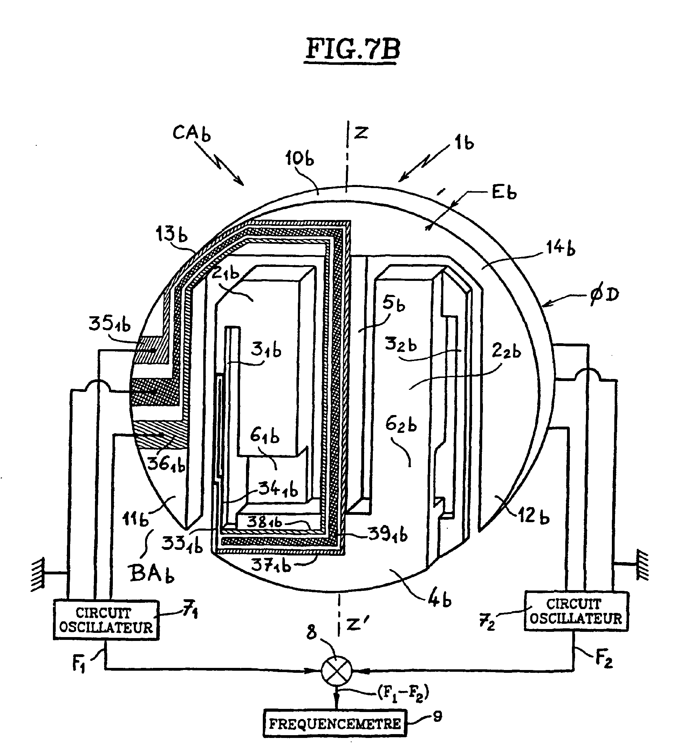

La figure 7B montre une autre réalisation d'accéléromètre selon l'invention. Le corps monolithique de l'accéléromètre $Ca_b$ est en quartz. Les moyens de mise en vibration des résonateurs $3_{1b}$ et $3_{2b}$ dans l'accéléromètre $CA_b$ sont analogues à ceux décrits dans le brevet publié sous le numéro FR 2 685 964 au nom du demandeur (page 11, ligne 13 - page 12, ligne 13), et donc particulièrement adaptés aux vibrations en flexion parallèlement aux faces de la plaque de matériau. L'accéléromètre $CA_b$ diffère de l'accéléromètre CA représenté sur la figure 3 principalement par sa forme générale discoïde de diamètre D et d'épaisseur $E_b$, et par la forme en U de la partie fixe $1_b$. Cette partie fixe comporte un tronçon de base $10_b$ en forme de segment discoïde solidaire du pédoncule flexible $5_b$, deux branches $11_b$ et $12_b$ en forme de segments discoïdes s'étendant sensiblement le long des résonateurs $3_{1b}$ et $3_{2b}$ respectivement, et deux tronçons $13_b$ et $14_b$ en forme de portions d'anneau reliant le tronçon de base $10_b$ aux deux branches $11_b$ et $12_b$ respectivement. Ainsi les masses d'épreuve $2_{1b}$ et $2_{2b}$, les résonateurs $3_{1b}$ et $3_{2b}$, la troisième partie massive mobile $4_b$, le pédoncule flexible $5_b$ et les deux lamelles $6_{1b}$ et $6_{2b}$ sont situés à l'intérieur de la forme en U de la partie fixe $1_b$. Les branches $11_b$ et $12_b$ sont fixées, par exemple par collage, sur l'embase $Ba_b$ d'un boîtier cylindrique. S'agissant du filtrage expliqué antérieurement et illustré à la figure 4, qui consiste à obtenir que la partie fixe ne soit pratiquement pas sollicitée par les vibrations des résonateurs, l'efficacité de l'accéléromètre $CA_b$ est sensiblement équivalente à celle de l'accéléromètre CA, du fait que la souplesse du pédoncule flexible $5_b$ est sensiblement égale à la souplesse du pédoncule flexible 5, et que la masse totale des trois parties mobiles $2_{1b}$, $2_{2b}$ et $4_b$ est sensiblement égale à la masse totale des trois parties mobiles $2_1$, $2_2$ et 4. S'agissant de la miniaturisation et du rendement de fabrication, et donc du coût de réalisation, les accéléromètres CA et $CA_b$ sont aussi sensiblement équivalents. Comme montré à la figure 7B, les moyens de mise en vibration de chacun des résonateurs, par exemple le résonateur $3_{1b}$, sont sous la forme de deux électrodes métalliques $33_{1b}$ et $34_{1b}$ ayant des polarités opposées et excitant par effet piézo-électrique des vibrations en flexion du résonateur $3_{1b}$. Les électrodes $33_{1b}$ et $34_{1b}$ sont disposées sur le côté du résonateur $3_{1b}$ tourné vers l'extérieur du corps de l'accéléromètre, et leur configuration à "trois pistes" est décrite dans le brevet publié sous le numéro FR 2 685 964 déjà cité. Des connexions électriques entre les électrodes $33_{1b}$, et $34_{1b}$ et des traversées étanches (non représentées) de l'embase sont réalisées au niveau de la branche fixée $11_b$, par soudure sur des plages de contact métalliques respectives $35_{1b}$ et $36_{1b}$ de forme sensiblement rectangulaire. Comme illustré à la figure 7B, les plages métalliques $35_{1b}$ et $36_{1b}$ sont reliées aux électrodes respectives $33_{1b}$ et $34_{1b}$ par deux rubans conducteurs métalliques respectifs $37_{1b}$ et $38_{1b}$ supportés par la face visible de la partie mobile $4_b$, du pédoncule flexible $5_b$, du tronçon de base $10_b$ et du tronçon en forme de portion d'anneau $13_b$. Les électrodes, les rubans conducteurs et les plages de contact peuvent être simultanément obtenus par gravure d'une couche métallique adhérente à la face visible de la plaque de quartz à partir de procédés photolithographiques classiques. Cette couche métallique adhérente peut avantageusement être celle qui a préalablement servi de masque protecteur pour l'usinage du corps monolithique de l'accéléromètre. Les traversées étanches de l'embase connectées aux électrodes $33_{1b}$ et $34_{1b}$ sont reliées électriquement aux deux bornes d'un circuit oscillateur $7_1$ en sortie duquel est produit un signal alternatif à la fréquence de résonance F1 du résonateur $3_{1b}$. Une disposition identique d'électrodes, de rubans conducteurs et de plages de contact est prévue sur le résonateur $3_{2b}$ et la face opposée de la partie mobile $4_b$, du pédoncule flexible $5_b$, du tronçon de base $10_b$, du tronçon en forme de portion d'anneau $14_b$ et de la branche fixée $12_b$, en relation avec un second circuit oscillateur $7_2$ en sortie duquel est produit un signal alternatif à la fréquence de résonance $F_2$ du résonateur $3_{2b}$. Les sorties des deux circuits oscillateurs $7_1$ et $7_2$ sont reliées à un dispositif de mesure de fréquence différentielle incluant un circuit de soustraction de fréquence 8 et un fréquencemètre 9, la fréquence ($F_1 - F_2$) mesurée par le fréquencemètre 9 étant représentative de l'accélération à mesurer. De préférence, les valeurs des fréquences de résonance $F_1$ et $F_2$ des résonateurs sont voisines mais toutefois suffisamment écartées l'une de l'autre pour que la fréquence différentielle ($F_1 - F_2$) soit nettement plus grande que la limite supérieure de la bande passante de l'accéléromètre, quelle que soit l'intensité et le sens de l'accélération dans l'étendue de mesure prévue. Cela permet que la mesure de la fréquence différentielle ($F_1 - F_2$) par le fréquencemètre 9 s'effectue dans de bonnes conditions et ainsi que la précision de cette mesure ne soit pas altérée. À titre d'exemple, il peut être avantageux de réaliser un accéléromètre selon l'invention dont les fréquences $F_1$ et $F_2$ des résonateurs valent respectivement 55 000 Hz et 50 000 Hz en l'absence d'accélération, dont la variation de la fréquence différentielle vaut 25 Hz/g (g étant l'accélération due à la pesanteur), et pour lequel l'étendue de mesure est comprise entre - 100 g et + 100 g ; ainsi, la fréquence différentielle ($F_1 - F_2$) vaut 5000 Hz en l'absence d'accélération, et varie de 2500 Hz à 7500 Hz lorsque l'accélération varie de - 100 g à + 100 g ; la valeur minimale de 2500 Hz de cette fréquence différentielle permet que la bande passante de cet accéléromètre soit comprise entre 0 et 500 Hz. Les dimensions du corps monolithique de cet accéléromètre, en référence à la figure 7B, sont D = 6 mm et $E_b$ = 0,4 mm. Le fait que les fréquences de résonance F1 et F2 soient différentes, d'une valeur minimale relative de l'ordre de cinq pour cent, permet de réduire suffisamment les effets du couplage mécanique entre les deux résonateurs et ainsi de ne pas altérer la précision de mesure. Toujours selon la réalisation illustrée à la figure 7B, un ruban conducteur métallique $39_{1b}$ est situé entre les rubans conducteurs $37_{1b}$ et $38_{1b}$ sur la face visible de la partie mobile $4_b$, du pédoncule flexible $5_b$, du tronçon de base $10_b$ et du tronçon en forme de portion d'anneau $13_b$, et entre les plages de contact $35_{1b}$ et $36_{1b}$ sur la face visible de la branche fixée $11_b$. Un autre ruban conducteur métallique $39_{2b}$ (non visible sur la figure 7B) est disposé de façon identique sur la face opposée du corps monolithique de l'accéléromètre, entre les rubans conducteurs et les plages de contact qui sont en relation avec le second circuit oscillateur $7_2$. Les rubans conducteurs métalliques $39_{1b}$ et $39_{2d}$ sont reliés à la masse électrique commune aux circuits oscillateurs $7_1$ et $7_2$, ce qui permet de réduire le couplage électrique entre les signaux alternatifs produits en sortie des deux oscillateurs $7_1$ et $7_2$. Ainsi, le signal alternatif de fréquence différentielle produit en sortie du circuit de soustraction de fréquence 8 peut présenter un rapport signal sur bruit amélioré.

## Revendications

1. Accéléromètre miniature monolithique, usiné dans une plaque de matériau d'épaisseur E, comprenant une partie fixe (1), deux premières parties massives mobiles ($2_1$, $2_2$) appelées masses d'épreuve, deux lamelles d'articulation ($6_1$, $6_2$) ayant chacune une extrémité solidaire de l'une des deux parties massives mobiles ($2_1$, $2_2$), et deux réso-nateurs ($3_1$, $3_2$) ayant chacun une extrémité solidaire de l'une des deux parties massives mobiles ($2_1$, $2_2$), **caractérisé en ce qu'**il comprend une troisième partie massive mobile (4) solidaire de l'autre extrémité de chacun des deux résonateurs ($3_1$, $3_2$) et de chacune des deux lamelles d'articulation ($6_1$, $6_2$), et un pédoncule flexible (5) situé entre les deux premières parties massives mobiles ($2_1$, $2_2$) et reliant la troisième partie massive mobile (4) à la partie fixe (1).

2. Accéléromètre miniature monolithique selon la revendication 1, **caractérisé en ce que** les deux résonateurs ($3_1$, $3_2$) sont situés le long des bords des parties mobiles ($2_1$ et $2_2$) opposés à ceux en regard du pédoncule flexible (5).

3. Accéléromètre miniature monolithique selon la revendication 1, **caractérisé en ce que** le pédoncule flexible (5) est une poutre s'étendant sensiblement parallèlement aux résonateurs ($3_1$, $3_2$)

4. Accéléromètre miniature monolithique selon la revendication 3, **caractérisé en ce que** le pédoncule flexible est une poutre parallélépipédique dont l'épaisseur est égale à l'épaisseur E de la plaque de matériau usiné et la largeur (L5) est comprise entre la moitié et le double de l'épaisseur E de la plaque de matériau usiné.

5. Accéléromètre miniature monolithique selon la revendication 4, **caractérisé en ce que** le pédoncule flexible (5) présente une hauteur (H5) comprise entre cinq et vingt fois l'épaisseur E de la plaque de matériau usinée.

**6.** Accéléromètre miniature monolithique selon l'une quelconque des revendications précédentes, **caractérisé en ce que** les deux lamelles ($6_1$, $6_2$) sont parallélépipédiques et ont des largeurs (L$6_1$, L$6_2$) comprises entre cinq et cinquante fois leur épaisseur (E6).

**7.** Accéléromètre miniature monolithique selon l'une quelconque des revendications précédentes, **caractérisé en ce qu'**il présente sensiblement un axe de symétrie (Z ' Z).

**8.** Accéléromètre miniature monolithique selon l'une quelconque des revendications précédentes, **caractérisé en ce qu'**il est obtenu par usinage chimique en une seule étape effectué simultanément à partir des deux faces de la plaque de matériau jusqu'à atteindre une profondeur de gravure égale à E - E3.

**9.** Accéléromètre miniature monolithique selon l'une quelconque des revendications précédentes, **caractérisé en ce qu'**il est fixé sur une embase dont les grandes faces ne sont pas parallèles entr'elles.

## Patentansprüche

**1.** Monolithischer Miniatur-Beschleunigungsmesser, hergestellt aus einer Werkstoffplatte mit der Dicke E, bestehend aus einem festen Teil (1), zwei ersten massiven, beweglichen Teilen ($2_1$, $2_2$), den so genannten Prüfmassen, zwei Gelenklamellen ($6_1$, $6_2$), von denen jeweils ein Ende fest mit einem der beiden massiven beweglichen Teile ($2_1$, $2_2$) verbunden ist, und zwei Resonatoren ($3_1$, $3_2$), von denen jeweils ein Ende fest mit einem der beiden massiven beweglichen Teile ($2_1$, $2_2$) verbunden ist, **dadurch gekennzeichnet, dass** er ein drittes massives bewegliches Teil (4), das fest mit den jeweils anderen Enden der beiden Resonatoren ($3_1$, $3_2$) und den beiden Gelenklamellen ($6_1$, $6_2$) verbunden ist, und einen elastischen Stiel (5) umfasst, der zwischen den beiden ersten massiven beweglichen Teilen ($2_1$, $2_2$) angeordnet ist und das dritte massive bewegliche Teil (4) mit dem festen Teil (1) verbindet.

**2.** Monolithischer Miniatur-Beschleunigungsmesser nach Anspruch 1, **dadurch gekennzeichnet, dass** die beiden Resonatoren ($3_1$, $3_2$) an den Kanten der beweglichen Teile ($2_1$, $2_2$), dem elastischen Stiel (5) gegenüber entgegengesetzt angeordnet sind.

**3.** Monolithischer Miniatur-Beschleunigungsmesser nach Anspruch 1, **dadurch gekennzeichnet, dass** es sich bei dem elastischen Stiel (5) um einen Träger handelt, der in etwa parallel zu den Resonatoren ($3_1$, $3_2$) verläuft.

**4.** Monolithischer Miniatur-Beschleunigungsmesser nach Anspruch 3, **dadurch gekennzeichnet, dass** es sich bei dem elastischen Stiel um einen quaderförmigen Träger handelt, dessen Dicke der Dicke E der verarbeiteten Werkstoffplatte entspricht und dessen Breite (L5) zwischen der Hälfte und dem Doppelten der Dicke E der verarbeiteten Werkstoffplatte beträgt.

**5.** Monolithischer Miniatur-Beschleunigungsmesser nach Anspruch 4, **dadurch gekennzeichnet, dass** der elastische Stiel (5) eine Höhe (H5) aufweist, die zwischen dem Fünffachen und dem Zwanzigfachen der Dicke E der verarbeiteten Werkstoffplatte beträgt.

**6.** Monolithischer Miniatur-Beschleunigungsmesser nach einem der vorgenannten Ansprüche, **dadurch gekennzeichnet, dass** die beiden Lamellen ($6_1$, $6_2$) quaderförmig sind und eine Breite (L$6_1$, L$6_2$) aufweisen, die zwischen dem Fünffachen und dem Fünfzigfachen ihrer Dicke (E6) beträgt.

**7.** Monolithischer Miniatur-Beschleunigungsmesser nach einem der vorgenannten Ansprüche, **dadurch gekennzeichnet, dass** er eindeutig eine Symmetrieachse (Z'Z) aufweist.

**8.** Monolithischer Miniatur-Beschleunigungsmesser nach einem der vorgenannten Ansprüche, **dadurch gekennzeichnet, dass** er durch chemische Bearbeitung in einem einzigen Schritt hergestellt wird, der gleichzeitig auf beiden Seiten der Werkstoffplatte erfolgt, bis eine Gravurtiefe gleich E - E3 erreicht wird.

**9.** Monolithischer Miniatur-Beschleunigungsmesser nach einem der vogenannten Ansprüche, **dadurch gekennzeichnet, dass** er auf einer Unterlage befestigt ist, deren große Seiten zueinander nicht parallel sind.

**Claims**

1. A monolithic miniature accelerometer, machined in a plate of material having a thickness E, comprising a fixed part (1), two first mobile mass parts ($2_1$, $2_2$) referred to as inertial masses, two hinge blades ($6_1$, $6_2$) each having one end fastened to one of the two mobile mass parts ($2_1$, $2_2$), and two resonators ($3_1$, $3_2$) each having one end fastened to one of the two mobile mass parts ($2_1$, $2_2$), **characterized in that** it comprises a third mobile mass part (4) fastened to the other end of each of the two resonators ($3_1$, $3_2$) and of each of the two hinge blades ($6_1$, $6_2$), and a flexible stem (5) situated between the first two mobile mass parts ($2_1$, $2_2$) and connecting the third mobile mass part (4) to the fixed part (1).

2. A monolithic miniature accelerometer according to claim 1, **characterized in that** the two resonators ($3_1$, $3_2$) are situated along edges of the mobile parts ($2_1$ and $2_2$) opposite those opposite the flexible stem (5).

3. A monolithic miniature accelerometer according to claim 1, **characterized in that** the flexible stem (5) is a beam extending substantially parallel to the resonators ($3_1$, $3_2$).

4. A monolithic miniature accelerometer according to claim 3, **characterized in that** the flexible stem is a parallelepiped shaped beam whose thickness is equal to the thickness E of the machined plate of material and whose width (L5) is in the range from half to twice the thickness E of the machined plate of material.

5. A monolithic miniature accelerometer according to claim 4, **characterized in that** the flexible stem (5) has a height (H5) in the range from five to twenty times the thickness E of the machined plate of material.

6. A monolithic miniature accelerometer according to any one of preceding claims, **characterized in that** the two blades ($6_1$, $6_2$) are parallelepiped-shaped and have widths (L$6_1$, L$6_2$) in the range from five to fifty times their thickness (E6).

7. A monolithic miniature accelerometer according to any one of preceding claims, **characterized in that** it has substantially an axis of symmetry (Z'Z).

8. A monolithic miniature accelerometer according to any one of preceding claims, **characterized in that** it is obtained by chemically machining both faces of the plate of material simultaneously in one step to an etching depth equal to E - E3.

9. A monolithic miniature accelerometer according to any one of preceding claims, **characterized in that** it is fixed to a base whose larger faces are not parallel.

# FIG.1
## (TECHNIQUE ANTERIEURE)

# FIG.2
## (TECHNIQUE ANTERIEURE)

# FIG.3

# FIG.4

FIG.5A

FIG.5B

FIG.5C

## FIG.6A

## FIG.6B

# FIG.7A

## FIG.7B